# EUROPÄISCHE PATENTANMELDUNG

(11) **EP 2 567 623 A2**
(43) Veröffentlichungstag der Anmeldung: **13.03.2013**
(21) Anmeldenummer: 12006288.0
(22) Anmeldetag: 06.09.2012
(51) Int. Cl.: A23G 9/12, F25D 11/04

(54) **Kühl- und/oder Gefriergerät**

(30) Priorität: 07.09.2011 DE 102011112754
(71) Anmelder: Liebherr-Hausgeräte Ochsenhausen GmbH, 88416 Ochsenhausen (DE)
(72) Erfinder: Ertel, Thomas, 88299 Leutkirch (DE); Schick, Michael, 88480 Stetten (DE)
(74) Vertreter: Herrmann, Uwe

(57) **Zusammenfassung**

Die vorliegende Erfindung betrifft ein Kühl- und/oder Gefriergerät mit wenigstens einem Speiseeisbereiter und mit wenigstens einem Speiseeis-Kompartiment, in dem der wenigstens eine Speiseeisbereiter angeordnet ist, wobei es sich bei dem Speiseeis-Kompartiment um einen Bereich des Kühl- und/oder Gefriergerätes handelt, in dem die Temperatur im Betrieb des Gerätes höher oder geringer ist als die übliche Temperatur in anderen Kompartimenten des Gerätes, und wobei es sich bei den anderen Kompartimenten um wenigstens ein Gefrierfach und/oder Kaltlagerfach und/oder Kühlfach des Gerätes handelt, und/oder dass es sich bei dem Speiseeis-Kompartiment um einen Bereich des Kühl- und/oder Gefriergerätes handelt, in dem die Temperatur im Betrieb des Gerätes im Bereich von - 5°C und - 18°C und vorzugsweise im Bereich von - 5 °C und - 10 °C liegt.

## Beschreibung

Die vorliegende Erfindung betrifft ein Kühl- und/oder Gefriergerät mit wenigstens einem Speiseeisbereiter und mit wenigstens einem Speiseeis-Kompartiment, in dem der wenigstens eine Speiseeisbereiter angeordnet ist.

Aus dem Stand der Technik sind einfache Speiseeismaschinen bekannt, bei denen die Speiseeismasse in einer gekühlten Schüssel unter ständigem Rühren gefroren wird. Dabei kann die Kühlung der Speiseeismasse entweder aktiv mittels eines Kälteaggregates oder auch passiv mit einem vorgekühlten Wärmespeicher durchgeführt werden. Dabei kann der Wärmespeicher als Latentwärmespeicher oder auch als Wärmespeicher ausgebildet sein, der sensible Wärme speichert.

Insbesondere bei passiv gekühlten Geräten ist die Eisbereitung verhältnismäßig aufwendig, da das Gerät selbst für eine längere Zeit in einem Gefrierfach eines Kühl- und/oder Gefriergerätes tiefgekühlt werden muss, um zur Zubereitung von Speiseeis verwendet werden zu können. Abgesehen davon kann bei diesem Verfahren eine vergleichsweise kompakte Speiseeismasse entstehen, die während ihrer Lagerung schnell durchgefriert, wobei die enthaltenen Eiskristalle wachsen.

Dies führt dazu, dass insbesondere die Entnahme kleinerer Menge von Speiseeis aufgrund der großen Härte der Speiseeismasse schwierig ist und dass das Speiseeis sich beim Verzehr rauh und körnig anfühlt. Vor diesem Hintergrund ist die Verzehrqualität von im Haushalt hergestelltem Speiseeis üblicherweise lediglich unmittelbar nach der Herstellung mit industriell hergestelltem Speiseeis vergleichbar. Aufgrund des vorgenannten Sachverhaltes des Durchfrierens der Speiseismasse ist im Haushalt hergestelltes Speiseeis bereits nach ca. einer Stunde bei - 18° Lagertemperatur hart durchgefroren.

Der vorliegenden Erfindung liegt somit die Aufgabe zugrund, ein Kühl- und/oder Gefriergerät der eingangs genannten Art dahingehend weiterzubilden, dass auf vergleichsweise einfache Art und Weise qualitativ hochwertiges Speiseeis hergestellt werden kann.

Diese Aufgabe wird durch ein Kühl- und/oder Gefriergerät mit den Merkmalen des Anspruchs 1 gelöst. Danach ist vorgesehen, dass es sich bei dem genannten Speiseeis-Kompartiment um einen Bereich des Kühl- und/oder Gefriergerätes handelt, in dem die Temperatur in Betrieb des Gerätes höher oder geringer ist als die übliche Temperatur in anderen Kompartimenten des Gerätes, wobei es sich bei den anderen Kompartimenten um wenigstens ein Gefrierfach und/oder Kaltlagerfach und/oder Kühlfach des Gerätes handeln kann. Die Temperatur in dem genannten Speiseeis-Kompartiment soll somit verglichen mit der üblicherweise in einem Gefrierfach vorliegenden Temperatur höher sein, jedoch geringer als die üblicherweise in einem Kaltlagerfach und/oder Kühlfach vorliegende Temperatur.

Vorzugsweise ist vorgesehen, dass es sich bei dem Speiseeis-Kompartiment um einen Bereich des Kühl- und/oder Gefriergerätes handelt, in dem die Temperatur im Betrieb des Gerätes im Bereich vom - 5 °C und - 18 °C und vorzugsweise im Bereich von - 5 °C und - 10 °C liegt. Ein Gedanke der vorliegenden Erfindung liegt somit in einem speziellen Abteil bzw. Kompartiment, dessen Temperatur höher oder niedriger ist als die Temperatur des restlichen gekühlten Innenraums des Kühl- und/oder Gefriergerätes. Wie ausgeführt liegt die Temperatur dieses Speiseeis-Kompartimentes bevorzugt zwischen - 5 °C und - 18 °C und vorteilhaft zwischen - 5 °C und - 10 °C. Diese Temperatur bietet für die Lagerung von selbst hergestelltem Speiseeis optimale Bedingungen. Aufgrund der Tatsache, dass die Temperatur in diesem Kompartiment nach dieser Ausgestaltung der Erfindung höher liegt als in einem herkömmlichen Gefrierfach, bleibt das Speiseeis auch im kalten Zustand cremig und behält diese cremige Konsistenz auch bei einer Lagerung über Zeiträume von Stunden bis Wochen bei, ohne dass es zu einem Qualitätsverlust kommt. Abgesehen davon, bleibt das Eis aufgrund seiner cremigen Konsistenz gut aus dem Zubereitungs- bzw. Aufbewahrungsbehältnis entnehmbar.

Die vorliegende Erfindung betrifft des Weiteren ein Kühl- und/oder Gefriergerät mit wenigstens einem Speiseeisbereiter und mit wenigstens einem Speiseeis-Kompartiment, in dem der wenigstens eine Speiseeisbereiter angeordnet ist, wobei es sich bei dem Speiseeis-Kompartiment um ein Gefrierfach des Gerätes, um einen Teilbereich von diesem oder um ein sonstiges Kompartiment handelt, in dem der Speiseeisbereiter fest angeordnet oder vorzugsweise werkzeuglos entnehmbar ist. Die Entnahme kann beispielsweise durch einen Nutzer oder Servicetechniker durchgeführt werden.

Wie oben ausgeführt, wird für den Fall, dass das Gefrierfach als Speiseeis-Kompartiment dient, vorgesehen, dass die Temperatur in den oben genannten Bereichen liegt, um die Konsistenz des Speiseeises auch nach längerer Lagerungsdauer cremig zu halten. Vorzugsweise ist jedoch vorgesehen, dass das Gerät ein eigens für die Herstellung von Speiseeis vorgesehenes Kompartiment aufweist, in dem die oben genannten Temperaturbereiche eingehalten werden.

Dieses spezielle Abteil bzw. das Speiseeis-Kompartiment für die Speiseeismaschine kann durch Einsetzen von mindestens einer Trennplatte in den gekühlten Innenraum des Gerätes erhalten werden. Die Trennplatte kann eine thermisch isolierende Wirkung aufweisen, so dass in dem Speiseeis-Kompartiment eine andere Temperatur bzw. ein anderer Temperaturbereich eingestellt werden kann als in anderen, insbesondere als in angrenzenden Kompartimenten des Kühl- und/oder Gefriergerätes. Denkbar ist es, dass die Speiseeismaschine und/oder die genannte Trennplatte nutzerseitig bzw. durch einen Servicetechniker und vorzugsweise ohne Werkzeug aus dem Gerät entfernt werden können.

Denkbar ist es, dass wenigstens eine Wand des genannten Speiseeis-Kompartimentes durch eine Gefrierteilschublade gebildet wird, wobei die Gefrierteilschublade vorzugsweise mit einer wärmegedämmten Front ausgebildet ist.

Neben einer lösbaren bzw. entnehmbaren Trennplatte ist von der Erfindung auch der Fall umfasst, dass das spezielle Abteil, d. h. das genannte Speiseeis-Kompartiment für die Speiseeismaschine durch eine fest in das Gerät integrierte Trennwand ausgebildet wird.

Grundsätzlich kann das für die Speiseeismaschine vorgesehene Speiseeis-Kompartiment nach der Entnahme der Speiseeismaschine bzw. der Trennplatte auch für weitere Zwecke verwendet werden.

Das Speiseeis-Kompartiment kann über eine eigene Tür oder Klappe oder Loch verfügen. Denkbar ist es jedoch auch, dass das Speiseeis-Kompartiment mit wenigstens einem anderen Kompartiment über ein gemeinsames Verschlusselement /Tür, Klappe etc. verschließbar ist.

In weiterer Ausgestaltung der vorliegenden Erfindung ist vorgesehen, dass das Speiseeis-Kompartiment mit wenigstens einem weiteren Kompartiment des Gerätes derart in Verbindung steht, dass Luft aus dem weiteren Kompartiment dem Speiseeis-Kompartiment zuführbar ist oder dass das Speiseeis-Kompartiment abgeschlossen ist, so dass ein solcher Luftaustausch bei geschlossenem Speiseeis-Kompartiment ausgeschlossen ist.

Im ersten Fall ist es denkbar, die gewünschte Temperatur in dem Speiseeis-Kompartiment, d. h. in dem Kompartiment, in dem sich die Speiseeismaschine befindet, dadurch zu erreichen, dass eine Temperatursteuerung des Speiseeis-Kompartimentes beispielsweise durch Luftklappen und/oder Ventilatoren in einer Wandung und vorzugsweise in der oben genannten Trennplatte erfolgt, wobei über diese Luftklappen bzw. Ventilatoren kalte Luft aus einem Hauptkompartiment, bzw. aus einem anderen Kompartiment des Gerätes zugeführt wird. Dieses andere Kompartiment kann beispielsweise aktiv durch einen Verdampfer in herkömmlicher Weise gekühlt werden. Vorzugsweise weist dieses andere Kompartiment ein größeres Volumen auf als das Speiseeis-Kompartiment.

Von der vorliegenden Erfindung ist jedoch auch eine passive Einstellung der Temperatur in dem Speiseeis-Kompartiment umfasst. Denkbar ist es, dass die Isolationsstärke der wenigstens einen Wandung, vorzugsweise der entnehmbaren Trennplatte des Speiseeis-Kompartimentes so gewählt wird, dass der Wärmestrom durch die Trennplatte bzw. durch die Trennplatten und die weiteren umgebenden Wände sich bei dieser Temperatur im Gleichgewicht befindet, was bedeutet, dass die Temperatureinstellung in dem Speiseeis-Kompartiment allein aufgrund des Wärmedurchgangs durch dessen Wand/Wände erfolgt. In diesem Fall wird durch einen Wärmestrom durch die Wandungen des Speiseeis-Kompartimentes die Temperatur in diesem Kompartiment eingestellt, wobei der Wärmestrom unter anderem davon abhängt, welche wärmetechnischen Isolationseigenschaften die Trennplatte bzw. die Wandungen des genannten Speiseeis-Kompartimentes aufweisen.

In weiterer Ausgestaltung der Erfindung ist vorgesehen, dass die Kühlung der Kompartimente des Gerätes über insgesamt einen Verdampfer erfolgt, d. h. also dass das Speiseeis-Komaprtiment und wenigstens ein weiteres Kompartiment und vorzugsweise alle weiteren Kompartimente des Gerätes durch einen "zentralen" Verdampfer gekühlt wird und dass die erzeugte Kälte bzw. kalte Luft durch mindestens einen Ventilator, Luftführungen und/oder Klappen etc. auf die Kompartimente verteilt wird.

Denkbar ist es jedoch auch, dass wenigstens zwei Verdampfer vorgesehen sind, von denen einer ausschließlich oder auch dem genannten Speiseeis-Kompartiment zugeordnet ist, d. h. dieses kühlt. In diesem Fall ist vorzugsweise vorgesehen, dass zumindest ein Magnetventil oder ein sonstiges Steuerungsmittel ein Umschalten zwischen den beiden den Abteilen bzw. Kompartimenten zugeordneten Verdampfern oder das Zu- oder Abschalten eines der beiden Verdampfer ermöglicht.

Auf diese Weise ist es möglich, die Kälteleistung des oder der Verdampfer über ein Magnetventil einzustellen, wobei das Magnetventil derart ausgebildet ist, dass es den Kältemitteldurchfluss entsprechend vergrößert, verkleinert oder ganz absperrt.

In weiterer Ausgestaltung der Erfindung ist vorgesehen, dass wenigstens ein Kompressor und/oder wenigstens ein Gebläse und/oder wenigstens ein Druckbehälter, insbesondere eine Druckpatrone vorgesehen ist, der/das derart angeordnet ist, dass durch diese unmittelbar oder mittels dessen in diesem Falle hohl ausgebildeten Rührers Luft oder ein sonstiges Gas in die Speiseismasse einbringbar ist. Denkbar ist es somit, beispielsweise durch einen Luftkompressor oder einen sonstigen Kompressor oder ein Gebläse komprimierte Luft oder ein komprimiertes Gas in die Speiseeismasse einzubringen. Vorzugsweise geschieht dies über den Rührer, der in diesem Fall zumindest einen Hohlraum aufweisen muss, der auf der einen Seite mit dem Kompressor, Gebläse, Druckluftbehältnis etc. in Verbindung steht und auf der anderen Seite die Luft oder das Gas in die Speiseeismasse einleitet.

Die Luft wird so in die Speiseeismasse eingerührt, was den Vorteil mit sich bringt, dass deren Konsistenz gegenüber vorbekannten Lösungen weiter verbessert werden kann.

Wie ausgeführt kann zusätzlich oder alternativ zu einem Luftkompressor oder einem Gebläse eine Patrone oder ein Druckbehälter mit einem geeigneten Gas, wie beispielsweise Druckluft, CO₂, Stickstoff etc. vorgesehen sein. Denkbar ist es, über ein Magnetventil oder über ein sonstiges Steuerungsmittel, das von einer Elektronik oder Steuerungs - bzw. Regelungseinheit angesteuert wird, während der Zubereitung des Speiseeises das unter Druck stehende Gas bzw. die komprimierte Luft in die Speiseeismasse einzubringen, und zwar unmittelbar oder über den mit Hohlräumen und Ausströmöffnungen versehenen Rührer.

Denkbar ist es, dass der Rührer horizontale und/oder vertikale Arme aufweist und dass diese über Ausströmöffnungen verfügen, über die die komprimierte Luft bzw. das komprimierte Gas in die Speiseeismasse eingebracht wird. Vorzugsweise erfolgt die Zufuhr der komprimierten Luft bzw. des komprimierten Gases über die Achse, mit der auch die Ankopplung an den Antrieb des Rührers erfolgt.

In weiterer Ausgestaltung der Erfindung sind Mittel vorgesehen, mittels derer dem Nutzer unmittelbar an dem Gerät oder auch anderer Stelle, beispielsweise auf seinem Mobiltelefon signalisierbar ist, in welchem Stadium sich die Zubereitung des Speiseeises befindet und/oder ob ein nutzerseitiger Eingriff, insbesondere die Zugabe von Zutaten zu der Speiseeismasse erforderlich ist. So ist es beispielsweise denkbar, dass die Herstellung von Speiseeis je nach Rezept in einem bestimmten Stadium der Zubereitung die Zugabe weiterer Stoffe erfordert. Dies kann durch eine Steuer- oder Regelungseinheit oder durch ein sonstiges Mittel erkannt werden und es kann dem Nutzer der entsprechende Zeitpunkt mitgeteilt werden, zu dem diese Zugabe weiterer Stoffe erfolgen muss.

Dieser Zeitpunkt kann die Speiseeismaschine bzw. das diese beinhaltende Kühl - und/oder Gefriergerät durch ein geeignetes Signalisierungsmittel mitteilen. In Betracht kommen beispielsweise akustische oder optische Signale, wie beispielsweise eine oder mehrere blinkende LEDs, ein oder mehrere Symbole auf einem LCD - oder sonstigen Display, ein oder mehrere Hinweise auf einem Graphikdisplay, auf einem Smartphone etc.

Beispielsweise ist es denkbar, dass die Zugabe von Trockeneis, kohlesäurehaltigen Getränken, biologischen Organismen oder chemischen Zusatzstoffen, wie Emulgatoren und Stabilisatoren angezeigt werden kann.

Wie ausgeführt ist es denkbar, dass ein Überwachungsmittel vorgesehen ist, das zu einem bestimmten Zeitpunkt das entsprechende Signal ausgibt. Dieses Signal kann nach Ablauf einer bestimmten Zeitspanne nach Beginn der Speiseeis-Zubereitung abgegeben werden oder auch in Abhängigkeit von einem anderen Parameter, wie beispielsweise der Konsistenz des Speiseeises.

Es ist beispielsweise denkbar, dass erfasst wird, welche Konsistenz das Speiseeis aufweist, etwa über den Abgriff des Antriebsmoments des Rührers und das in Abhängigkeit von diesem oder auch anderen Parametern dem Nutzer entsprechend signalisiert wird, dass ein Eingriff, beispielsweise die Zugabe von Zusatzstoffen oder die Änderung eines Zubereitungsparameters oder auch das Ende der Speiseeis-Zubereitung angezeigt wird.

Hinsichtlich des Aufbaus des Speiseeisbereiters und dessen Betriebsweise verweisen wir auf die DE 10 2010 033 242.9, auf deren Offenbarungsgehalt hiermit vollumfänglich Bezug genommen wird.

Weitere Einzelheiten und Vorteile der Erfindung werden anhand eines im Folgenden beschriebenen Ausführungsbeispiels näher erläutert. Das Ausführungsbeispiel betrifft ein Kühl- und Gefriergerät, in dem zumindest ein Gefrierkompartiment, ein Kühlkompartiment sowie das erfindungsgemäße Speiseeis-Kompartiment angeordnet ist. Dieses Speiseeis-Kompartiment ist durch eine nutzerseitig entnehmbare Trennplatte von dem Gefrierkompartiment abgetrennt. Denkbar ist es, dass das Gefrierfach und das Speiseeis-Kompartiment über jeweils eine oder über eine gemeinsame Tür oder Klappe geöffnet oder verschlossen werden können.

Die Kühlung des Gefrierkompartimentes erfolgt über einen herkömmlichen Verdampfer und die Kühlung des genannten Speiseeis-Kompartimentes erfolgt dadurch, dass beispielsweise in der genannten Trennplatte, die das Speiseeis-Kompartiment von dem Gefrierkompartiment trennt, ein oder mehrere Luftöffnungen oder Ventilatoren vorgesehen sind, die bei Bedarf geöffnet bzw. in Betrieb gesetzt werden, und zwar dann, wenn das Speiseeis-Kompartiment Kältebedarf meldet. Dies bedeutet, dass das Gefrierkompartiment in herkömmlicher Weise aktiv durch einen Verdampfer gekühlt wird und dass die Temperatursteuerung oder -regelung des abgetrennten Teils, d. h. des Speiseeis-Kompartimentes durch Luftklappen und/oder Ventilatoren in der Trennplatte oder an anderer Stelle erfolgt, d. h. dass das Speiseeis-Kompartiment mit kalter Luft aus dem Gefrierkompartiment versorgt wird.

Dies ist selbstverständlich nur eine exemplarische Ausgestaltung der Erfindung. Umfasst ist auch, dass Kaltluft, beispielsweise aus einem Kaltlagerfach oder Kühlkompartiment in das Speiseeis-Kompartiment geführt wird.

In einer weiteren Ausführungsform der Erfindung ist vorgesehen, dass die Temperatursteuerung des Speiseeis-Kompartimentes passiv dadurch erfolgt, dass die Isolationsstärke von wenigstens einer Wandung, vorzugsweise von allen Wandungen des Speiseeis-Kompartimentes und insbesondere der entnehmbaren Trennplatte so gewählt wird, dass die Wärmeströme durch die Trennplatte und gegebenenfalls weitere, das Speiseeis-Kompartiment umgebende Wände sich im Gleichgewicht befinden, so dass also die Temperatureinstellung aufgrund des natürlichen Wärmedurchgangs erfolgt.

Grundsätzlich kann das Gerät über einen gemeinsamen Verdampfer verfügen, der alle Kompartimente mit Kälte versorgt. Denkbar ist es jedoch auch, dass das Gerät über mehrere Verdampfer verfügt, von denen einer teilweise oder ausschließlich zur Kühlung des genannten Speiseeis-Kompartimentes dient. Die Ansteuerung des Verdampfers kann beispielsweise über ein Magnetventil erfolgen. Meldet das Speiseeis-Kompartiment Kältebedarf, kann das Magnetventil den entsprechenden zugehörigen Verdampfer entsprechend mit Kältemittel versorgen, so dass das Speiseeis-Kompartiment durch diesen Verdampfer gekühlt wird. Zur Temperaturregelung in dem Speiseeis-Kompartiment kann dieses zumindest einen Temperatursensor aufweisen, der mit einer Regelung oder Steuerung in Verbindung steht und der die genannten Maßnahmen zur Einbringung von kalter Luft bzw. zum Einschalten des Verdampfers einleitet.

## Patentansprüche

1. Kühl- und/oder Gefriergerät mit wenigstens einem Speiseeisbereiter und mit wenigstens einem Speiseeis-Kompartiment, in dem der wenigstens eine Speiseeisbereiter angeordnet ist, **dadurch gekennzeichnet, dass** es sich bei dem Speiseeis-Kompartiment um einen Bereich des Kühl- und/oder Gefriergerätes handelt, in dem die Temperatur im Betrieb des Gerätes höher oder geringer ist als die übliche Temperatur in anderen Kompartimenten des Gerätes, wobei es sich bei den anderen Kompartimenten um wenigstens ein Gefrierfach und/oder Kaltlagerfach und/oder Kühlfach des Gerätes handelt, und/oder **dadurch gekennzeichnet, dass** es sich bei dem Speiseeis-Kompartiment um einen Bereich des Kühl- und/oder Gefriergerätes handelt, in dem die Temperatur im Betrieb des Gerätes im Bereich von - 5°C bis - 18°C und vorzugsweise im Bereich von - 5 °C bis - 10 °C liegt.

2. Kühl- und/oder Gefriergerät mit wenigstens einem Speiseeisbereiter und mit wenigstens einem Speiseeis-Kompartiment, in dem der wenigstens eine Speiseeisbereiter angeordnet ist, **dadurch gekennzeichnet, dass** es sich bei dem Speiseeis-Kompartiment um ein Gefrierfach des Gerätes oder um einen Teil von diesem oder um ein sonstiges Kompartiment handelt, in dem der Speiseeisbereiter fest angeordnet ist oder vorzugsweise nutzerseitig, vorzugsweise werkzeuglos entnehmbar ist.

3. Kühl- und/oder Gefriergerät nach Anspruch 2, **dadurch gekennzeichnet, dass** das Kühl- und/oder Gefriergerät gemäß den Merkmalen des kennzeichnenden Teils des Anspruchs 1 ausgebildet ist.

4. Kühl- und/oder Gefriergerät nach einem der vorhergehenden Ansprüche, **dadurch gekennzeichnet, dass** zumindest eine Trennplatte vorgesehen ist, die das Speiseeis-Kompartiment von dem oder den anderen Kompartimenten des Gerätes abtrennt, wobei die Trennplatte fest in dem Gerät angeordnet ist oder vorzugsweise werkzeuglos entnehmbar ist und/oder dass wenigstens eine Wand des Speiseeis-Kompartimentes durch eine Gefrierteilschublade gebildet wird, wobei die Gefrierteilschublade vorzugsweise mit einer wärmegedämmten Front ausgebildet ist.

5. Kühl- und/oder Gefriergerät nach einem der vorhergehenden Ansprüche, **dadurch gekennzeichnet, dass** das Speiseeis-Kompartiment mit wenigstens einem weiteren im Betrieb des Gerätes gekühlten Kompartiment des Gerätes derart in Verbindung steht, dass Luft aus dem weiteren Kompartiment dem Speiseeis-Kompartiment zuführbar ist oder dass das Speiseeis-Kompartiment abgeschlossen ist, so dass bei geschlossener Tür oder Klappe des Speiseeis-Kompartimentes ein Luftaustausch mit weiteren Kompartimenten ausgeschlossen ist.

6. Kühl- und/oder Gefriergerät nach einem der vorhergehenden Ansprüche, **dadurch gekennzeichnet, dass** das Gerät zur Kühlung der Kompartimente über insgesamt einen Verdampfer verfügt oder dass wenigstens zwei Verdampfer vorhanden sind, von denen einer ausschließlich oder auch zur Kühlung des Speiseeis-Kompartimentes dient, wobei in diesem Fall vorzugsweise wenigstens ein Mittel, insbesondere wenigstens ein Magnetventil vorgesehen ist, das derart angeordnet ist, dass durch das Mittel der Kältemittelstrom durch einen oder beide der wenigstens zwei Verdampfer veränderbar ist.

7. Kühl- und/oder Gefriergerät nach einem der vorhergehenden Ansprüche, **dadurch gekennzeichnet, dass** der Speiseeisbereiter wenigstens einen Behälter zur Aufnahme und/oder Zubereitung des Speiseeises, wenigstens einen Rührer zum Verrühren der Speiseeismasse und wenigstens ein Antriebsmittel aufweist, mittels dessen der Rührer antreibbar ist, wobei zwei oder alle der vorgenannten Komponenten des Speiseeisbereiters als gemeinsame Baugruppe ausgebildet sind oder als modulare, voneinander trennbare Komponenten ausgebildet sind.

8. Kühl- und/oder Gefriergerät nach einem der vorhergehenden Ansprüche, **dadurch gekennzeichnet, dass** wenigstens ein Kompressor und/oder wenigstens ein Gebläse und/oder wenigstens ein Druckbehälter, insbesondere eine Druckpatrone, vorgesehen ist, der/das derart angeordnet ist, dass durch diese unmittelbar oder mittels des in diesem Falle hohl ausgebildeten Rührers Luft oder ein sonstiges Gas in die Speiseeismasse einbringbar ist, wobei vorzugsweise vorgesehen ist, dass der Rührer horizontale und/oder vertikale Arme aufweist, die mit einer oder mehreren Ausströmöffnungen für die Luft bzw. für das Gas ausgebildet sind und/oder wobei vorzugsweise vorgesehen ist, dass die Zufuhr der Luft bzw. des Gases über die Achse erfolgt, mit der der Rührer an seinen Antrieb angekoppelt ist.

9. Kühl- und/oder Gefriergerät nach Anspruch 8, **dadurch gekennzeichnet, dass** wenigstens ein Ventil, insbesondere wenigstens ein Magnetventil sowie wenigstens eine Steuer- oder Regelungseinheit vorgesehen ist, mittels derer bestimmbar ist, wann Luft oder ein sonstiges Gas in die Speiseeismasse eingebracht werden soll, wobei die Steuer- oder Regelungseinheit derart mit dem genannten Ventil in Verbindung steht, dass auf Veranlassung durch die Steuer - oder Regelungseinheit das Ventil geöffnet oder geschlossen oder die Größe seiner Durchlassöffnung veränderbar ist.

10. Kühl- und/oder Gefriergerät nach einem der vorhergehenden Ansprüche, **dadurch gekennzeichnet, dass** Mittel vorgesehen sind, mittels derer dem Nutzer unmittelbar an dem Gerät oder an einer entfernt angeordneten Einheit signalisierbar ist, in welchem Stadium sich die Zubereitung des Speiseeises befindet und/oder ob ein nutzerseitiger Eingriff, insbesondere die Zugabe von Zutaten zu der Speiseeismasse erforderlich ist.
